# EUROPÄISCHE PATENTSCHRIFT

(11) **EP 2 981 640 B1**
(45) Veröffentlichungstag und Bekanntmachung des Hinweises auf die Patenterteilung: **28.12.2016**
(21) Anmeldenummer: 14731534.5
(22) Anmeldetag: 04.04.2014
(51) Int. Cl.: D01F 2/00, C08B 37/00, C08L 5/00, D01F 9/00

(54) **POLYSACCHARIDFASER UND VERFAHREN ZU IHRER HERSTELLUNG**
POLYSACCHARIDE FIBRES AND METHOD FOR THE PRODUCTION THEREOF
FIBRES EN POLYSACCHARIDES ET LEUR PROCÉDÉ DE FABRICATION

(30) Priorität: 05.04.2013 AT 2572013
(43) Veröffentlichungstag der Anmeldung: 10.02.2016
(73) Patentinhaber: Lenzing AG, 4860 Lenzing (AT)
(72) Erfinder: DÜRNBERGER, Franz, A-4860 Lenzing (AT); REDLINGER, Sigrid, A-4860 Lenzing (AT); SCHREMPF, Christoph, A-4701 Bad Schallerbach (AT); RÜF, Hartmut, A-4861 Schörfling (AT); FIRGO, Heinrich, A-4840 Vöcklabruck (AT); KRONER, Gert, A-4863 Seewalchen (AT)
(74) Vertreter: Hanemann, Otto
(86) Internationale Anmeldenummer: PCT/AT2014/000072
(87) Internationale Veröffentlichungsnummer: WO 2014/161019

(56) Entgegenhaltungen:
- WO-A1-2013/020919
- WO-A1-2013/036968
- US-A- 4 306 059

## Beschreibung

Die vorliegende Erfindung betrifft ein Verfahren zur Herstellung von Polysaccharidfasern, die als faserbildende Substanz eine Mischung von Cellulose und α(1→3)-Glucan enthalten sowie die daraus hergestellten Fasern und ihre Verwendung.

### Stand der Technik

Polysaccharide spielen als Materialien, die aus nachwachsenden Rohstoffen gewonnen werden können, eine immer größere Rolle. Eines der am häufigsten vorkommenden Polysaccharide ist die Cellulose. Baumwollfasern, die fast ausschließlich aus Cellulose bestehen, sind ein Beispiel für die Wichtigkeit von Polysacchariden. Aber auch aus anderen cellulosischen Rohstoffen gewonnene Materialien wie z. B. cellulosische Kunstfasern gewinnen immer mehr an Bedeutung.

Der Gattungsname "Lyocell-Fasern" wurde von der BISFA (The International Bureau for the Standardization of Man-made Fibers) Cellulosefasern zugeteilt, die aus Lösungen in einem organischen Lösungsmittel ohne Bildung eines Derivats hergestellt werden.

Bis heute hat sich jedoch nur ein Verfahren zur großtechnischen Herstellung von Fasern der Gattung Lyocell durchgesetzt und zwar das Aminoxid-Verfahren. Bei diesem Verfahren wird als Lösungsmittel ein tertiäres Aminoxid verwendet, bevorzugt N-Methylmorpholin-N-oxid (NMMO).

Tertiäre Aminoxide sind schon seit langem als alternative Lösungsmittel für Cellulose bekannt. Aus der US 2,179,181 ist beispielsweise bekannt, dass tertiäre Aminoxide Zellstoff ohne Derivatisierung zu lösen vermögen und dass aus diesen Lösungen cellulosische Formkörper wie z.B. Fasern hergestellt werden können. In der US 3,447,939 werden cyclische Aminoxide als Lösungsmittel für Cellulose beschrieben.

Wie dieses Verfahren ausgeführt wird, ist dem Fachmann grundsätzlich seit längerem aus vielen Patentschriften und sonstigen Publikationen bekannt. So beschreibt unter anderem die EP 356 419 B1 die Lösungsherstellung und die EP 584 318 B1 das Verspinnen solcher Lösungen von Cellulose in wasserhaltigen tertiären Aminoxiden.

Der im Aminoxid-Verfahren hauptsächlich verwendete cellulosische Rohstoff ist Zellstoff, der aus Holz gewonnen wird. Die im Holz, wie auch in anderen pflanzlichen Cellulosequellen wie Baumwoll-Linters, Stroh, etc. vorliegenden Cellulosemoleküle sind sehr langkettig, d. h. sie weisen einen hohen Polymerisationsgrad auf. Um eine großtechnisch gut verarbeitbare Cellulosespinnlösung zu erhalten, muss der Polymerisationsgrad der Cellulosemoleküle gezielt eingestellt werden, wobei zwangsläufig ein Teil der Polymermoleküle verkürzt werden. Dies geschieht in den üblichen Zellstoffherstellungsverfahren sowie auch in separaten Vorbehandlungsstufen wie Bleichen, Säurebehandlung oder Bestrahlung durch eine Spaltung der ursprünglich langen Cellulosemoleküle. Neben den kürzeren Ketten mit dem angestrebten Polymerisationsgrad entstehen dabei aber auch noch wesentlich kürzere Bruchstücke wie Oligomere oder sogar Monomere, die spätestens beim Ausfällen der Spinnlösung im Fällbad in Lösung bleiben, nicht zur Faserbildung beitragen und damit verloren gehen. Die auf diesem Weg eintretenden Rohstoffverluste können erheblich sein und die Wirtschaftlichkeit des gesamten Aminoxid-Verfahrens beeinträchtigen.

Die US 7,000,000 beschreibt Fasern, die durch Verspinnen einer Lösung von Polysacchariden, die im Wesentlichen aus Hexose-Wiederholungseinheiten bestehen, die über α(1→3)-glycosidische Bindungen verknüpft sind. Diese Polysaccharide können hergestellt werden, indem eine wässrige Lösung von Saccharose mit GtfJ Glucosyltransferase, isoliert aus Streptococcus salivarius, in Kontakt gebracht wird (Simpson et al. Microbiology, vol 41, pp 1451-1460 (1995)). "Im Wesentlichen" bedeutet in diesem Zusammenhang, dass innerhalb der Polysaccharidketten vereinzelt Fehlstellen auftreten können, an denen andere Bindungskonfigurationen auftreten. Diese Polysaccharide sollen für die Zwecke der vorliegenden Erfindung als "α(1→3)-Glucan" bezeichnet werden.

Die US 7,000,000 offenbart zunächst Möglichkeiten zur enzymatischen Herstellung von α(1→3)-Glucan aus Monosacchariden. Auf diese Weise können relativ kurzkettige Polysaccharide ohne Verlust an Monomerbausteinen hergestellt werden, da die Polymerketten aus den Monomerbausteinen aufgebaut werden. Im Gegensatz zur Herstellung kurzkettiger Cellulosemoleküle ist die Herstellung von α(1→3)-Glucan umso preisgünstiger, je kürzer die Polymerketten sind, da dann nur eine geringe Verweilzeit in den Reaktoren notwendig ist.

Gemäß der US 7,000,000 soll das α(1→3)-Glucan derivatisiert, bevorzugt acetyliert, werden. Das Lösungsmittel ist bevorzugt eine organische Säure, eine organische Halogenverbindung, ein fluorierter Alkohol oder eine Mischung aus solchen Komponenten. Diese Lösungsmittel sind teuer und aufwendig zu regenerieren.

Es wurde daher versucht, α(1→3)-Glucane anstelle von Cellulose in einem Aminoxid-Verfahren unter großtechnisch kommerziell angewendeten Verfahrensbedingungen einzusetzen. Leider zeigte sich, dass sich unter diesen Bedingungen α(1→3)-Glucane nicht zufriedenstellend zu Fasern verarbeiten ließen.

### Aufgabe

Die Aufgabe bestand gegenüber diesem Stand der Technik darin, eine Polysaccharid-Faser sowie ein Verfahren zu deren Herstellung zur Verfügung zu stellen, die nicht die oben genannten Nachteile aufweisen. Der Polysaccharid-Rohstoff sollte preiswert herzustellen sein und das Verarbeitungsverfahren sollte bekannt und wirtschaftlich sowie auf vorhandenen Anlagen durchführbar sein.

### Beschreibung der Erfindung

Die Lösung der oben beschriebenen Aufgabe besteht in einem Verfahren zur Herstellung einer Lyocell-Faser, wobei die Spinnlösung wässriges Aminoxid und als faserbildende Substanz eine Mischung aus Cellulose und α(1→3)-Glucan enthält. Eine solche Faser soll für die Zwecke der vorliegenden Erfindung ebenfalls als Lyocell-Faser bezeichnet werden, obwohl sie neben Cellulose noch ein weiteres faserbildendes Polysaccharid, nämlich das α(1→3)-Glucan, enthält.

Für die Zwecke der vorliegenden Erfindung soll der Begriff "Faser" sowohl Stapelfasern mit definierter Schnittlänge als auch Endlosfilamente umfassen. Sämtliche im Folgenden beschriebenen Prinzipien der Erfindung gelten grundsätzlich sowohl für Stapelfasern als auch für Endlosfilamente.

Der Einzelfasertiter der erfindungsgemäßen Fasern kann zwischen 0,1 und 10 dtex betragen. Bevorzugt ist er zwischen 0,5 und 6,5 dtex und besonders bevorzugt zwischen 0,9 und 3,0 dtex. Im Falle von Stapelfasern beträgt die Schnittlänge üblicherweise zwischen 0,5 und 120 mm, bevorzugt zwischen 20 und 70 mm und besonders bevorzugt zwischen 35 und 60 mm. Im Falle von Endlosfilamenten beträgt die Anzahl der Einzelfilamente im Filamentgarn zwischen 50 und 10.000, bevorzugt zwischen 50 und 3.000.

Das α(1→3)-Glucan kann hergestellt werden, indem eine wässrige Lösung von Saccharose mit GtfJ Glucosyltransferase isoliert aus Streptococcus salivarius in Kontakt gebracht wird (Simpson et al. Microbiology, vol 41, pp 1451-1460 (1995)).

In einer bevorzugten Ausführungsform des erfindungsgemäßen Verfahrens besteht das α(1→3)-Glucan zu mindestens 90 % aus Hexose-Einheiten und mindestens 50 % der Hexose-Einheiten sind durch α(1→3)-glycosidische Bindungen verknüpft.

Das Verfahren zur Herstellung der erfindungsgemäßen Faser besteht aus folgenden Schritten:
1. Herstellung einer Spinnlösung enthaltend wässriges Aminoxid sowie als faserbildende Substanz eine Mischung aus Cellulose und α(1→3)-Glucan nach einer der beiden folgenden Methoden:
   a. Das α(1→3) Glucan kann in Form einer Lösung in wässrigem Aminoxid der nach bekannten Methoden hergestellten Celluloselösung zugegeben werden.
   b. Das α(1→3) Glucan kann bereits zum Zellstoff vor Inkontaktbringen mit wässrigem Aminoxid zugemischt werden.
2. Extrudieren der Spinnlösung durch eine Düse über einen Luftspalt in ein wässriges Aminoxid enthaltendes Spinnbad, Wäsche der regenerierten Faser zur Entfernung von Aminoxid und Trocknung.

Die Konzentration der faserbildenden Substanz in der Spinnlösung kann zwischen 5 und 20 Gew.-% betragen, bevorzugt sind 8 bis 15 Gew.-%, besonders bevorzugt 10 bis 14 Gew.-%.

Die faserbildende Substanz im erfindungsgemäßen Verfahren kann zwischen 1 und 99 Gew.-% α (1→3)-Glucan enthalten. Besonders bevorzugt ist ein Anteil des α(1→3)-Glucans zwischen 5 und 30 Gew.-% und ganz besonders bevorzugt ein Anteil des α(1→3)-Glucans zwischen 10 und 20 Gew.-%. Unterhalb 5% ist der wirtschaftliche Effekt des α(1→3) Glucan-Zusatzes für übliche Anwendungen der erfindungsgemäßen Fasern zu gering; oberhalb 30% können in zunehmendem Maße Faserverklebungen im Spinnprozess auftreten. Beide Grenzen können jedoch unter besonderen Bedingungen bzw. für besondere Anwendungen der erfindungsgemäßen Fasern überschritten werden; auch Fasern mit einem α(1→3)-Glucan-Anteil.zwischen 1 und 5 Gew.-% bzw. zwischen 30 und 99 Gew.-% sind vom Umfang der vorliegenden Erfindung ausdrücklich mit umfasst. Beispielsweise ist bei einer geringen Lochdichte der Spinndüse, d.h. großem Abstand zwischen den Einzelfilamenten im Luftspalt die Verklebungsgefahr wesentlich geringer.

Der Polymerisationsgrad des im erfindungsgemäßen Verfahren eingesetzten α(1→3) Glucans, ausgedrückt als Gewichtsmittel DP_{w}, kann zwischen 200 und 2000 liegen; bevorzugt sind Werte zwischen 500 und 1000.Das Aminoxid ist bevorzugt N-Methylmorpholin-N-oxid.

Im erfindungsgemäßen Verfahren sind weiterhin folgende Verfahrensparameter bevorzugt: Extrusionstemperatur der Spinnlösung aus den Düsen zwischen 90 und 135°C, insbesondere zwischen 120 und 130°C; Düsenausstoß aus der Spinndüse je nach beabsichtigtem Einzelfasertiter zwischen 0,01 und 0,2 g/Loch*min, bevorzugt zwischen 0,02 und 0,1 g/Loch*min; Länge des Luftspaltes zwischen 7 und 70 mm, insbesondere zwischen 20 und 35 mm; NMMO-Konzentration im wässrigen Spinnbad zwischen 0 und 35 Gew.-%, insbesondere zwischen 0 und 25 Gew.-%.

Gegenstand der vorliegenden Erfindung ist auch eine Lyocell-Faser, die Cellulose und α(1→3)-Glucan enthält.

Erfindungsgemäß kann die faserbildende Substanz der erfindungsgemäßen Faser zwischen 1 und 99 Gew.-% α(1→3)-Glucan enthalten. Besonders bevorzugt ist ein Anteil des α(1→3)-Glucans zwischen 5 und 30 Gew.-% und ganz besonders bevorzugt ein Anteil des α(1→3)-Glucans zwischen 10 und 20 Gew.-%. Unterhalb 5% ist der wirtschaftliche Effekt des α(1→3) Glucan-Zusatzes für übliche Anwendungen zu gering; oberhalb 30% können in zunehmendem Maße Faserverklebungen auftreten. Beide Grenzen können jedoch in besonderen Fällen bzw. für besondere Anwendungen der erfindungsgemäßen Fasern überschritten werden; auch Fasern mit einem α(1→3)-Glucan-Anteil.zwischen 1 und 5 Gew.-% bzw. zwischen 30 und 99 Gew.-% sind vom Umfang der vorliegenden Erfindung ausdrücklich mit umfasst.

In einer bevorzugten Ausführungsform besteht das α(1→3)-Glucan der erfindungsgemäßen Lyocell-Faserzu mindestens 90 % aus Hexose-Einheiten und mindestens 50 % der Hexose-Einheiten sind durch α(1→3)-glycosidische Bindungen verknüpft.

Ebenfalls Gegenstand der vorliegenden Erfindung ist die Verwendung der erfindungsgemäßen Fasern zur Herstellung von textilen Erzeugnissen wie Garnen, Geweben, Gestricken oder Gewirken.

Überraschenderweise wurde gefunden, dass die erfindungsgemäßen Fasern - noch besser als handelsübliche Lyocellfasern ohne α(1→3)-Glucan - sehr gut geeignet sind, um durch Behandlungsmethoden, die dem Fachmann aus der Verarbeitung von Lyocell-Fasern grundsätzlich bekannt sind, beispielsweise aus Schmidt M., Lenzinger Berichte 9 (1994), S. 95 - 97, Textilien mit Peach-skin-Effekt herzustellen. Diese Eignung beruht auf der hohen Fibrillationsneigung der erfindungsgemäßen Fasern.

Um Fibrillen von der Faseroberfläche zu entfernen, die in verschiedenen Behandlungsschritten der textilen Kette auftreten, wird oft ein sogenannter mechanischer Polierschritt ("mechanical polishing") oder auch ein enzymatischer Polierschritt ("Bio-Polishing"; siehe z.B. Schmidt M., Lenzinger Berichte 9 (1994), S. 95 - 97) angewendet. Die erfindungsgemäßen Fasern eignen sich grundsätzlich sehr gut zur Verwendung in einem Herstellverfahren für Textilien, in dem ein solcher mechanischer oder enzymatischer Polierschritt angewendet wird. Eine solche Verwendung der erfindungsgemäßen Fasern ist daher ebenfalls Gegenstand der vorliegenden Erfindung. Gefärbte, aus den erfindungsgemäßen Fasern hergestellte Flächengebilde (Textilien) weisen außerdem eine verbesserte Weissscheuerung auf und zeigen nach dem Waschen weniger Vergrauung und weniger Pilling.

Die erfindungsgemäßen Fasern eignen sich besonders gut für alle Produkte, die im Trocken- oder Nasslegeverfahren hergestellt werden können. Dazu zählen beispielsweise alle Papieranwendungeri und Vliesstoffe, die sogenannten Non-woven-Produkte. Durch starke mechanische Beanspruchung der in einer Flüssigkeit wie beispielsweise Wasser dispergierten erfindungsgemäßen Fasern kann die Fibrillation ebenfalls hervorgerufen werden. Geeignete Geräte sind beispielsweise die auch in der Papierindustrie eingesetzten Refiner. Die erfindungsgemäßen Fasern bilden gegenüber Lyocell-Fasern aus 100% Cellulose dickere Fibrillen aus, wodurch sich diese fibrillierten Fasern besonders gut für die oben genannten Nonwoven-Anwendungen eignen.

Weiters eignen sich die erfindungsgemäßen Fasern sehr gut für alle Anwendungen, in denen sie in stark gekürzter Form zur Oberflächenbehandlung anderer Formkörper oder Flächen eingesetzt werden. Dazu zählen unter anderem Oberflächenbeschichtungen und Beflockungen. Die erfindungsgemäßen Fasern werden dazu in einer Länge von 10 bis ca. 500 μm hergestellt, beispielsweise durch Schneiden oder Mahlen in einer Schneidmühle.

Im Folgenden wird die Erfindung anhand von Beispielen beschrieben. Die Erfindung ist jedoch ausdrücklich nicht auf diese Beispiele beschränkt, sondern umfasst auch alle anderen Ausführungsformen, die auf dem gleichen erfinderischen Konzept beruhen.

### Beispiele

Der Polymerisationsgrad der α(1→3)-Glucane wurde mittels GPC in DMAc/LiCl ermittelt. Im Folgenden wird stets das Gewichtsmittel des Polymerisationsgrades (DP_{w}) angegeben.

Spinnlösungen mit jeweils 13 Gew.-% Feststoff (Cellulose + α(1→3) Glucan) / 77 Gew.-% N-Methyl-morpholin-N-oxid / 10 Gew.-% Wasser wurden bei 130°C aus einer Düse über einen Luftspalt (Länge 30 mm) in Wasser gesponnen. Im Luftspalt wurde mit trockener Luft (d.h. Feuchte = 0% r.h.) bei Raumtemperatur angeblasen. Der Düsenausstoß aus der Spinndüse betrug 0,05 g/Loch*min. Als cellulosischer Rohstoff wurde ein Saiccor-Zellstoff mit einer SCAN-Viskosität von 450 ml/g eingesetzt. Es wurden α(1→3) Glucane mit zwei unterschiedlichen Polymerisationsgraden verwendet. Die Glucan-Mengen beziehen sich auf den Anteil des α(1→3)-Glucans an der faserbildenden Substanz.

Die Eigenschaften der erhaltenen Fasern sind in der Tabelle 1 angegeben:

**Tabelle 1**

| Beispiel | Zusatz | Glucan-Menge % | Titer dtex | FFk cN/tex | FDk % | FFn cN/tex | FDn % |
|---|---|---|---|---|---|---|---|
| 1 Vergleichs-beispiel | ohne | - | 1,58 | 34,2 | 10,1 | 27,0 | 11,9 |
| 2 | Glucan DP_{w} 1000 | 5 | 1,58 | 34,5 | 11,2 | 26,4 | 14,7 |
| 3 | Glucan DP_{w}1000 | 10 | 1,59 | 31,8 | 10,7 | 20,9 | 14,7 |
| 4 | Glucan DP_{w}1000 | 20 | 1,61 | 27,4 | 9,2 | 16,3 | 9,2 |
| 5 | Glucan DP_{w} 800 | 20 | 1,65 | 25,4 | 9,6 | 18,6 | 10,7 |

| | | | | | | | |
|---|---|---|---|---|---|---|---|
| Dabei bedeuten : FFk Faserfestigkeit konditioniert FDk Faserdehnung konditioniert FFn Faserfestigkeit nass FDn Faserdehnung nass | | | | | | | |

## Patentansprüche

1. Verfahren zur Herstellung einer Lyocell-Faser, **dadurch gekennzeichnet, dass** die Spinnlösung wässriges Aminoxid und als faserbildende Substanz eine Mischung aus Cellulose und α(1→3)-Glucan enthält.

2. Verfahren nach Anspruch 1, wobei die faserbildende Substanz zwischen 1 und 99 Gew.-%, bevorzugt zwischen 5 und 30 Gew.-% α(1→3)-Glucan enthält.

3. Verfahren nach Anspruch 1, wobei das Aminoxid N-Methylmorpholin-N-oxid ist.

4. Verfahren nach Anspruch 1, wobei das α(1→3)-Glucan zu mindestens 90 % aus Hexose-Einheiten besteht und mindestens 50 % der Hexose-Einheiten durch α(1→3)-glycosidische Bindungen verknüpft sind.

5. Verfahren gemäß den vorhergehenden Ansprüchen, wobei die Faser eine Stapelfaser oder ein Endlosfilament ist.

6. Lyocell-Faser, **dadurch gekennzeichnet, dass** sie Cellulose und α(1→3)-Glucan enthält.

7. Lyocell-Faser nach Anspruch 6, wobei die faserbildende Substanz zwischen 1 und 99 Gew.-%, bevorzugt zwischen 5 und 30 Gew.-% α(1→3)-Glucan enthält.

8. Lyocell-Faser nach Anspruch 6, wobei das α(1→3)-Glucan zu mindestens 90 % aus Hexose-Einheiten besteht und mindestens 50 % der Hexose-Einheiten durch α(1→3)-glycosidische Bindungen verknüpft sind.

9. Faser gemäß den vorhergehenden Ansprüchen, wobei die Faser eine Stapelfaser oder ein Endlosfilament ist.

10. Verwendung der Faser nach Anspruch 6 zur Herstellung von textilen Erzeugnissen wie Garnen, Geweben, Gestricken oder Gewirken.

11. Verwendung der Faser nach Anspruch 6 zur Herstellung von Textilien mit Peach-skin-Effekt.

12. Verwendung der Faser nach Anspruch 6 in einem Herstellverfahren für Textilien, in dem ein mechanischer oder enzymatischer Polierschritt angewendet wird.

13. Verwendung der Faser nach Anspruch 6 zur Herstellung von Vliesstoffen.

14. Verwendung der Faser nach Anspruch 6 zur Herstellung von Papier.

15. Verwendung gemäß den vorhergehenden Ansprüchen, wobei die Faser eine Stapelfaser oder ein Endlosfilament ist.

## Claims

1. A method for the production of a lyocell fiber, **characterized in that** the spinning solution contains aqueous amine oxide and, as a fiber-forming substance, a mixture of cellulose and α(1→3)-glucan.

2. The method as claimed in claim 1, wherein said fiber-forming substance contains between 1 und 99 % by weight, preferably between 5 and 30 % by weight, of α(1→3)-glucan.

3. The method as claimed in claim 1, wherein said amine oxide is N-methylmorpholine-N-oxide.

4. The method as claimed in claim 1, wherein at least 90 % of said α(1→3)-glucan are hexose units and at least 50 % of the hexose units are linked via α(1→3)-glycosidic bonds.

5. The method as claimed in the preceding claims, wherein the fiber is a staple fiber or a continuous filament.

6. A lyocell fiber, **characterized in that** it contains cellulose and α(1→3)-glucan.

7. The lyocell fiber as claimed in claim 6, wherein said fiber-forming substance contains between 1 and 99 % by weight, preferably between 5 and 30 % by weight, of α(1→3)-glucan.

8. The lyocell fiber as claimed in claim 6, wherein at least 90 % of said α(1→3)-glucan are hexose units and at least 50 % of said hexose units are linked via α(1→3)-glycosidic bonds.

9. The fiber as claimed in the preceding claims, wherein the fiber is a staple fiber or a continuous filament.

10. Use of the fiber as claimed in claim 6 for the production of textile products such as yarns, woven fabrics, or knitted fabrics.

11. Use of the fiber as claimed in claim 6 for the production of textiles having a peach-skin effect.

12. Use of the fiber as claimed in claim 6 in a method for the production of textiles, wherein a mechanical or enzymatic polishing step is employed.

13. Use of the fiber as claimed in claim 6 for the production of nonwovens.

14. Use of the fiber as claimed in claim 6 for the production of paper.

15. Use as claimed in the preceding claims, wherein the fiber is a staple fiber or a continuous filament.

## Revendications

1. Procédé de fabrication d'une fibre lyocell, **caractérisé en ce que** la solution à filer contient de l'oxyde d'amine aqueux et, comme substance fibrogène, un mélange de cellulose et de α(1→3)-glucane.

2. Procédé selon la revendication 1, la substance fibrogène contenant entre 1 et 99 % en masse, de préférence entre 5 et 30 % en masse de α(1→3)-glucane.

3. Procédé selon la revendication 1, l'oxyde d'amine étant du N-oxyde de N-méthylmorpholine.

4. Procédé selon la revendication 1, le α(1→3)-glucane étant constitué au moins à 90 % d'unités d'hexose, et 50 % des unités d'hexose étant liées par des liaisons glycosidiques en α(1→3).

5. Procédé selon les revendications précédentes, la fibre étant une fibre discontinue ou un filament continu.

6. Fibre lyocell, **caractérisée en ce qu'**elle contient de la cellulose et du α(1→3)-glucane.

7. Fibre lyocell selon la revendication 6, la substance fibrogène contenant entre 1 et 99 % en masse, de préférence entre 5 et 30 % en masse de α(1→3)-glucane.

8. Fibre lyocell selon la revendication 6, le α(1→3)-glucane étant constitué au moins à 90 % d'unités d'hexose, et 50 % des unités d'hexose étant liées par des liaisons glycosidiques en α(1→3).

9. Fibre selon les revendications précédentes, la fibre étant une fibre discontinue ou un filament continu.

10. Utilisation de la fibre selon la revendication 6 pour la fabrication de produits textiles comme des fils, tissus ou tricots.

11. Utilisation de la fibre selon la revendication 6 pour la fabrication de textiles avec effet peau de pêche.

12. Utilisation de la fibre selon la revendication 6 dans un procédé de fabrication de textiles employant une étape de polissage mécanique ou enzymatique.

13. Utilisation de la fibre selon la revendication 6 pour la fabrication de non-tissés.

14. Utilisation de la fibre selon la revendication 6 pour la fabrication de papier.

15. Utilisation selon les revendications précédentes, la fibre étant une fibre discontinue ou un filament continu.
